# EUROPEAN PATENT APPLICATION

(11) **EP 3 130 640 A1**
(43) Date of publication of application: **15.02.2017**
(21) Application number: 15873192.7
(22) Date of filing: 24.12.2015
(51) Int. Cl.: C08L 61/06, C08K 3/04, C08K 7/06, C08K 7/20, C08L 27/18, F16C 33/12, F16C 33/20

(54) **PHENOLIC-RESIN MOLDING MATERIAL FOR SLIDING MEMBER, AND SLIDING MEMBER**

(30) Priority: 25.12.2014 JP 2014263390
(71) Applicant: Sumitomo Bakelite Co.,Ltd., Tokyo 140-0002 (JP)
(72) Inventor: TAKIHANA, Yoshihiro, Tokyo 140-0002 (JP); KOIZUMI, Koji, Tokyo 140-0002 (JP); FUJII, Shunsuke, Tokyo 140-0002 (JP)
(74) Representative: Ter Meer Steinmeister & Partner
(86) International application number: PCT/JP2015/086058
(87) International publication number: WO 2016/104624

(57) **Abstract**

A phenolic-resin molding material for a sliding member of the present invention includes a phenolic-resin, graphite, polytetrafluoroethylene, and spherical glass beads. In addition, a content of the phenolic-resin in the phenolic-resin molding material for a sliding member is 15% by weight or more and 50% by weight or less.

## Description

### Technical Field

The present invention relates to a phenolic-resin molding material for a sliding member and a sliding member.

### Background Art

Mechanism components used in automobiles and the like are often used in harsh environments such as a high-temperature environment and environments in which friction with other components is caused. Therefore, in recent years, for such mechanism components, there has been a demand not only for excellent mechanical strength but also for characteristics such as high heat resistance or wear resistance. In order to satisfy these demanded characteristics, mechanism components formed of ceramics, metals, or the like have been widely used. However, in a case in which ceramics or metals are used, there have been problems of the weight of mechanism components increasing, a long period of time being taken for processes, high costs, and the like. Therefore, in response to strengthening demand for weight reduction of mechanism components, techniques for molding mechanism components using a plastic material have attracted attention (for example, refer to PTL 1 and 2).

Particularly, as materials satisfying the characteristics required for mechanism components, phenolic-resin molding materials are known and are attracting attention as alternative materials for ceramics or metals. Molding products obtained using a phenolic-resin molding material are highly heat-resistant, and can also be easily processed, and thus have a great advantage when used. In addition, in order to impart excellent mechanical strength to molding products, adding glass fibers or the like as a filling base material to phenolic-resin molding materials has been carried out in the related art. In this case, although the mechanical strength improves, there is a problem of the wear resistance deteriorating, and thus the phenolic-resin molding materials are not appropriate for manufacturing mechanism components requiring wear resistance.

Therefore, in order to impart wear resistance to mechanism components obtained using a phenolic-resin molding material and improve the slidability of the mechanism components, addition of graphite to the phenolic-resin molding material is proposed (for example, refer to PTL 3). However, even in a case in which graphite is added to the phenolic-resin molding material, it is not possible to sufficiently improve the slidability and wear resistance of mechanism components. Therefore, there is a demand for developing molding materials from which molding mechanism components having superior slidability and wear resistance can be molded.

### Citation List

### Patent Literature

[PTL 1] Japanese Laid-Open Patent Publication No. 2001-241389
[PTL 2] Japanese Laid-Open Patent Publication No. 2003-138042
[PTL 3] Japanese Laid-Open Patent Publication No. 2002-003698

### Summary of Invention

### Technical Problem

An object of the present invention is to provide a phenolic-resin molding material for a sliding member from which sliding members having excellent slidability and wear resistance can be molded while maintaining excellent heat resistance and mechanical strength and a sliding member which is obtained by molding a cured article of the phenolic-resin molding material for a sliding member and has excellent slidability and wear resistance while maintaining excellent heat resistance and mechanical strength.

### Solution to Problem

The above-described object is achieved using the present invention described in the following (1) to (10).
(1) A phenolic-resin molding material for a sliding member including: a phenolic-resin; graphite; polytetrafluoroethylene; and spherical glass beads,
   in which a content of the phenolic-resin in the phenolic-resin molding material for a sliding member is 15% by weight or more and 50% by weight or less.
(2) The phenolic-resin molding material for a sliding member according to (1), in which a content of the polytetrafluoroethylene is 3 parts by mass or more and 15 parts by mass or less with respect to 100 parts by mass of the phenolic-resin.
(3) The phenolic-resin molding material for a sliding member according to (1) or (2), in which an average particle diameter of the glass beads is 1 µm or larger and 50 µm or smaller.
(4) The phenolic-resin molding material for a sliding member according to any one of (1) to (3), in which a Vickers hardness (defined in JIS Z 2244) of the glass beads is 8.5 GPa or lower.
(5) The phenolic-resin molding material for a sliding member according to any one of (1) to (4), in which a content of the glass beads is 10 parts by mass or more and 50 parts by mass or less with respect to 100 parts by mass of the phenolic-resin.
(6) The phenolic-resin molding material for a sliding member according to any one of (1) to (5), in which a number-average molecular weight of the polytetrafluoroethylene is 10,000 or more and 10,000,000 or less.
(7) The phenolic-resin molding material for a sliding member according to any one of (1) to (6), further including: a carbon fiber.
(8) The phenolic-resin molding material for a sliding member according to any one of (1) to (7), satisfying Requirement A below:
   Requirement A: when a pin-on-disc test in which a sliding member that has been molded into a disc shape using the phenolic-resin molding material for a sliding member is rotated in a circumferential direction at a circumferential velocity V [m/sec] in a state in which a load of a surface pressure P [MPa] is imparted to an upper surface of the sliding member in a vertical direction using three cylindrical pins is carried out according to a ball-on-disc-type friction and wear testing method defined in JIS R 1613 (defined in 1993) and a dynamic friction coefficient of the sliding member is measured, the dynamic friction coefficient reaches 0.15 or lower under a condition of PV=5.0.
(9) The phenolic-resin molding material for a sliding member according to (8), further satisfying Requirement B below:
   Requirement B: when the sliding member that has been molded into the disc shape using the phenolic-resin molding material for a sliding member is rotated in the circumferential direction at the circumferential velocity V [m/sec] in a state in which the load of the surface pressure P [MPa] is imparted to the upper surface of the sliding member in the vertical direction using one cylindrical ring according to a thrust cylinder (Suzuki)-type friction and wear testing method defined in JIS K 7218 (defined in 1986), and the dynamic friction coefficient of the sliding member is measured, the dynamic friction coefficient reaches 0.25 or lower under a condition of PV=0.5.
(10) A sliding member formed by molding the phenolic-resin molding material for a sliding member according to any one of (1) to (9).

### Advantageous Effects of Invention

When the phenolic-resin molding material for a sliding member of the present invention is provided with the above-described constitution, it is possible to provide excellent slidability and wear resistance to sliding members obtained by molding the phenolic-resin molding material for a sliding member while maintaining excellent heat resistance and mechanical strength.

### Brief Description of Drawings

FIG. 1 is a view for describing a method for measuring a dynamic friction coefficient in a pin-on-disc manner according to a ball-on-disc-type friction and wear testing method defined in JIS R 1613 (defined in 1993).
FIG. 2 is a view for describing a method for measuring the dynamic friction coefficient according to a thrust cylinder-type (Suzuki-type) friction and wear testing method defined in JIS K 7218 (defined in 1986).

### Description of Embodiments

Hereinafter, a phenolic-resin molding material for a sliding member and a sliding member of the present invention will be described in detail on the basis of a preferred embodiment illustrated in the accompanying drawings.

### <Phenolic-resin molding material for sliding member>

First, the phenolic-resin molding material for a sliding member of the present invention will be described.

The phenolic-resin molding material for a sliding member of the present invention includes a phenolic-resin, graphite, polytetrafluoroethylene, and spherical glass beads. In addition, the phenolic-resin molding material for a sliding member of the present invention is prepared so that the content of the phenolic-resin in the phenolic-resin molding material for a sliding member reaches 15% by weight or more and 50% by weight or less of the entire phenolic-resin molding material for a sliding member.

When the phenolic-resin molding material for a sliding member is prepared so as to have the above-described constitution, it is possible to provide excellent slidability and wear resistance to sliding members obtained by molding the phenolic-resin molding material for a sliding member while maintaining excellent heat resistance and mechanical strength.

Hereinafter, individual constituent materials in the phenolic-resin molding material for a sliding member will be described.

### (Phenolic-resin)

A phenolic-resin is included in the phenolic-resin molding material for a sliding member in order to improve the heat resistance of sliding members to be obtained.

Examples of the phenolic-resin include novolac-type phenolic resins such as a phenol novolac resin, a cresol novolac resin, a bisphenol A-type novolac resin, and an arylalkylene-type novolac resin, unmodified resole phenolic resins such as a dimethylene ether-type resole resin and a methylol-type resole resin, resole-type novolac resins such as oil-modified resole phenolic resins that are modified with wood oil, linseed oil, walnut oil, or the like, and the like. These phenolic-resins can be used singly or in a combined form.

In addition, in a case in which a novolac-type phenolic-resin is used, the phenolic-resin molding material for a sliding member includes a curing agent. As the curing agent, hexamethylenetetramine is used. Furthermore, in a case in which hexamethylenetetramine is used, the content thereof is not particularly limited, but is preferably 10 parts by mass or more and 30 parts by mass or less and more preferably 15 parts by mass or more and 20 parts by mass or less with respect to 100 parts by mass of the novolac-type phenolic-resin. When the content of hexamethylenetetramine is set in the above-described range, it is possible to improve the mechanical strength and molding shrinkage amount of a cured article of the phenolic-resin molding material for a sliding member, that is, a sliding member.

In addition, as the phenolic-resin, a resole-type phenolic-resin and a novolac-type phenolic-resin may be jointly used. In such a case, it is possible to further enhance the mechanical strength of sliding members to be obtained and also enhance toughness.

Furthermore, the number-average molecular weight of the phenolic-resin is not particularly limited, but is, for example, preferably 500 to 1,000 and more preferably 700 to 900. In a case in which the number-average molecular weight is lower than the lower limit value, depending on the kind or the like of the phenolic-resin, the viscosity of the phenolic-resin molding material for a sliding member melted during the manufacturing of a sliding member decreases, consequently, the workability of a work for producing sliding members deteriorates, and there is a concern that the duration necessary to produce sliding members may increase. In addition, in a case in which the number-average molecular weight exceeds the upper limit value, the phenolic-resin molding material for a sliding member is not sufficiently melted, and there is a concern that the productivity of sliding members may decrease.

In addition, the content of the phenolic-resin in the phenolic-resin molding material for a sliding member is 15% by weight or more and 50% by weight or less, preferably 15% by weight or more and 45% by weight or less, and more preferably 30% by weight or more and 45% by weight or less with respect to the entire phenolic-resin molding material for a sliding member.

When the content of the phenolic-resin in the phenolic-resin molding material for a sliding member is set in the above-described range, it is possible to impart productivity and molding characteristics necessary for the phenolic-resin molding material for a sliding member and easily and reliably set the bending strength and bending elasticity of a cured article of a phenolic-resin molding material for a sliding member that is obtained by means of a heating treatment, that is, a sliding member in a preferred range described below.

Furthermore, when the content of the phenolic-resin in the phenolic-resin molding material for a sliding member is set in the above-described range, it is possible to prevent the wear resistance of sliding members from significantly decreasing.

Meanwhile, in a case in which the content of the phenolic-resin in the phenolic-resin molding material for a sliding member is less than 15% by weight, the productivity and molding characteristics of sliding members to be obtained degrade. On the other hand, in a case in which the content of the phenolic-resin in the phenolic-resin molding material for a sliding member exceeds 50% by weight, the strength or wear resistance of sliding members to be obtained significantly degrades. Therefore, in any cases, it becomes impossible to actually use sliding members to be obtained as mechanism components for automobiles and the like.

### (Graphite)

Graphite is included in the phenolic-resin molding material for a sliding member in order to improve the slidability and wear resistance of sliding members to be obtained.

The graphite is not particularly limited, examples thereof include earthy graphite, scaly graphite, massive graphite, and the like, and the graphite can be used singly or two or more kinds of graphite in a combined form. Among these, earthy graphite is preferably used. In such a case, it is possible to more reliably improve the slidability of sliding members.

In addition, generally, particulate graphite is added to the phenolic-resin molding material for a sliding member. The average particle diameter of the graphite is not particularly limited, but is, for example, preferably 1 µm or larger and 200 µm or smaller and more preferably 1 µm or larger and 100 µm or smaller. When the average particle diameter of the graphite is set in the above-described range, it is possible to reliably improve the slidability and wear resistance of sliding members to be obtained.

Furthermore, the content of the graphite is not particularly limited, but is preferably 20 parts by mass or more and 70 parts by mass or less and more preferably 35 parts by mass or more and 50 parts by mass or less with respect to 100 parts by mass of the phenolic-resin (in a case in which a novolac-based phenolic-resin is used, the total amount of the novolac-based phenolic-resin and hexamethylenetetramine which is 100 parts by mass). In such a case, it is possible to obtain sliding members having particularly excellent slidability and wear resistance.

### (Polytetrafluoroethylene)

Polytetrafluoroethylene (PTFE) is included in the phenolic-resin molding material for a sliding member in order to improve the slidability and wear resistance of sliding members to be obtained.

In order to improve slidability, generally, particulate polytetrafluoroethylene is added to the phenolic-resin molding material for a sliding member. The average particle diameter of the polytetrafluoroethylene is not particularly limited, but is, for example, preferably 1 µm or larger and 200 µm or smaller and more preferably 5 µm or larger and 100 µm or smaller. When the average particle diameter of the polytetrafluoroethylene is set in the above-described range, it is possible to reliably improve the slidability and wear resistance of sliding members to be obtained.

In addition, the number-average molecular weight of the polytetrafluoroethylene is not particularly limited, but is, for example, preferably 10,000 to 10,000,000 and more preferably 100,000 to 10,000,000. In such a case, it is possible to impart excellent slidability to sliding members to be obtained and reliably prevent the wear resistance of sliding members from degrading.

Furthermore, the content of the polytetrafluoroethylene is not particularly limited, but is preferably 3 parts by mass or more and 15 parts by mass or less and more preferably 5 parts by mass or more and 13 parts by mass or less with respect to 100 parts by mass of the phenolic-resin (in a case in which a novolac-based phenolic-resin is used, the total amount of the novolac-based phenolic-resin and hexamethylenetetramine which is 100 parts by mass). In such a case, it is possible to obtain sliding members having particularly excellent slidability and wear resistance without significantly impairing the effect of the phenolic-resin that imparts high heat resistance, productivity, and molding characteristics.

### (Glass beads)

The glass beads form particulate shapes (spherical shapes) and are included in the phenolic-resin molding material for a sliding member in order to improve the slidability and wear resistance of sliding members to be obtained.

A material constituting the glass beads is not particularly limited, examples thereof include SiO₂, B₂O₃, P₂O₅, GeO₂, BeF₂, As₂S₃, and the like, and, among these, one material or a combination of two or more materials can be used. In addition, to the material constituting the glass beads, at least one material of TiO₂, TeO₂, Al₂O₃, and Bi₂O₃ may be further added.

The average particle diameter of the glass beads is not particularly limited, but is, for example, preferably 1 µm or larger and 50 µm or smaller and preferably 3 µm or larger and 30 µm or smaller. When the average particle diameter of the glass beads is set to be equal to or smaller than the upper limit value, it is possible to sufficiently increase the specific surface area of the glass beads. Therefore, in a case in which the glass beads include an oxide, it is possible to increase the bonds between hydroxyl groups on the surfaces of the glass beads and phenolic hydroxyl groups of the phenolic-resin. As a result, it is possible to improve adhesiveness between the glass beads and the phenolic-resin and improve the mechanical strength of sliding members to be obtained. On the other hand, when the average particle diameter of the glass beads is smaller than the lower limit value, depending on the content and the like of the glass beads, there are cases in which the effect of the glass beads that improve slidability and wear resistance cannot be sufficiently obtained.

In addition, the particle size distribution of the glass beads is preferably as narrow as possible. In such a case, it is possible to prevent the slidability and wear resistance of sliding members from becoming uneven due to the unevenness in the particle sizes of the glass beads.

Furthermore, the Vickers hardness (defined in JIS Z 2244) of the glass beads is preferably 8.5 GPa or lower. In such a case, it is possible to prevent the glass beads from breaking in sliding members due to shear stress or pressure being imparted to sliding members. Meanwhile, the Vickers hardness of the glass beads can be measured using a micro Vickers hardness tester.

Furthermore, when the average particle diameter and Vickers hardness of the glass beads are respectively set in the above-described ranges, it is possible to reliably improve the slidability and wear resistance of sliding members to be obtained.

Furthermore, the content of the glass beads is not particularly limited, but is preferably 10 parts by mass or more and 50 parts by mass or less and more preferably 15 parts by mass or more and 50 parts by mass or less with respect to 100 parts by mass of the phenolic-resin (in a case in which a novolac-based phenolic-resin is used, the total amount of the novolac-based phenolic-resin and hexamethylenetetramine which is 100 parts by mass). In such a case, it is possible to obtain sliding members having particularly excellent slidability and wear resistance without significantly impairing the effect of the phenolic-resin that imparts high heat resistance, productivity, and molding characteristics.

### (Carbon fiber)

In addition, the phenolic-resin molding material for a sliding member preferably further includes a carbon fiber in addition to the phenolic-resin, the graphite, the polytetrafluoroethylene, and the glass beads. In such a case, it is possible to further improve the mechanical strength of sliding members to be obtained.

The carbon fiber is not particularly limited, examples thereof include a variety of carbon fibers such as cellulose-based carbon fibers, acrylonitrile-based carbon fibers, phenolic carbon fibers, and pitch-based carbon fibers, and, among these, one fiber or a combination of two or more fibers can be used.

In addition, the specific surface area of the carbon fiber is preferably 500 m²/g or more and more preferably 1,000 m²/g or more.

Furthermore, the fiber diameter of the carbon fiber is not particularly limited, but is, for example, preferably 1 µm or longer and 20 µm or shorter and more preferably 5 µm or longer and 10 µm or shorter.

When a carbon fiber having the above-described specific surface area and fiber diameter is used, it is possible to further improve the mechanical strength of sliding members to be obtained.

Furthermore, the content of the carbon fiber is not particularly limited, but is preferably 30 parts by mass or more and 100 parts by mass or less and more preferably 50 parts by mass or more and 70 parts by mass or less with respect to 100 parts by mass of the phenolic-resin (in a case in which a novolac-based phenolic-resin is used, the total amount of the novolac-based phenolic-resin and hexamethylenetetramine which is 100 parts by mass). In such a case, it is possible to obtain sliding members having superior mechanical strength.

Furthermore, the phenolic-resin molding material for a sliding member may include components other than the respective components described above.

The other components are not particularly limited, examples thereof include additives such as an inorganic filler such as calcium carbonate, boron carbide, clay, mica, talc, or wollastonite, a levelling agent, a defoamer, a mold release agent, a curing aid, and a pigment, and, among these, one additive or a combination of two or more additives can be used.

In addition, the phenolic-resin molding material for a sliding member may include, for example, a solvent such as methyl ethyl ketone, acetone, toluene, or dimethyl formaldehyde. In such a case, a resin material and the like are dissolved in the solvent, and thus it is possible to turn the phenolic-resin molding material for a sliding member into a varnish form.

Meanwhile, the above-described varnish-form phenolic-resin molding material for a sliding member can be obtained by, for example, if necessary, turning the resin material and the solvent into a varnish form by means of heating and kneading using a heating roll, a biaxial kneader, or the like and, furthermore, mixing other material thereinto.

In addition, the solid-form phenolic-resin molding material for a sliding member can be obtained by cooling and drying the varnish-form phenolic-resin molding material for a sliding member and then grinding or grinding and granulating the varnish-form phenolic-resin molding material for a sliding member.

### <Sliding member>

Furthermore, a method for molding the phenolic-resin molding material for a sliding member, that is, a method for obtaining a sliding member is not particularly limited, and, for example, methods such as an injection molding method, a transfer molding method, and a compression molding method can also be used. Among these, particularly, the injection molding method is preferably used.

In a case in which the injection molding method is used, as an example of the molding conditions, the temperature is in a range of 160°C to 180°C, the pressure is in a range of 10 to 20 MPa, and the curing duration is in a range of 40 to 120 seconds. When a mold having a space corresponding to a target shape of the sliding member is filled with the phenolic-resin molding material for a sliding member under these conditions, it is possible to mold a variety of sliding members (molding products). In addition, if necessary, in order to improve the degree of curing, anneal the phenolic-resin molding material for a sliding member, or the like, an after-baking treatment may be carried out on the obtained sliding member at a temperature in a range of 160°C to 250°C in the atmosphere for a heating duration of approximately 1 to 20 hours.

In the sliding member of the present invention, when a pin-on-disc test in which the sliding member that has been molded into a disc shape is rotated in a circumferential direction (an in-plane direction) at a circumferential velocity V [m/sec] in a state in which a load of a surface pressure P [MPa] is imparted to an upper surface of the sliding member in a vertical direction (an out-of-plane direction of the sliding member) using three cylindrical pins is carried out according to a ball-on-disc-type friction and wear testing method defined in JIS R 1613 (defined in 1993) and the dynamic friction coefficient of the sliding member is measured, the dynamic friction coefficient reaches 0.15 or lower under a condition of PV=5.0.

Here, the dynamic friction coefficient of the sliding member under a condition of PV=5.0 which is obtained according to the ball-on-disc-type friction and wear testing method defined in JIS R 1613 (defined in 1993), more specifically, can be obtained in the following manner.

That is, first, the phenolic-resin molding material for a sliding member is injection-molded under conditions of a temperature of 175°C, a pressure of 10 MPa, and a curing duration of 60 seconds and is then subjected to an after-baking treatment under conditions of a temperature of 180°C, in the atmosphere, and a heating duration of eight hours, thereby obtaining a disc-like test specimen (thickness 4 mm × radius 30 mm).

Next, three cylindrical pins (the area of the end surface=20 mm²) which is constituted of carbon steel (S45C) are prepared and are provided so as to stand on the upper surface of the test specimen in a state of being the same distance away from the center.

Next, a state in which a disc-like pin holder is placed on the three pins, that is a state in which the three pins are sandwiched by the test specimen and the pin holder is formed.

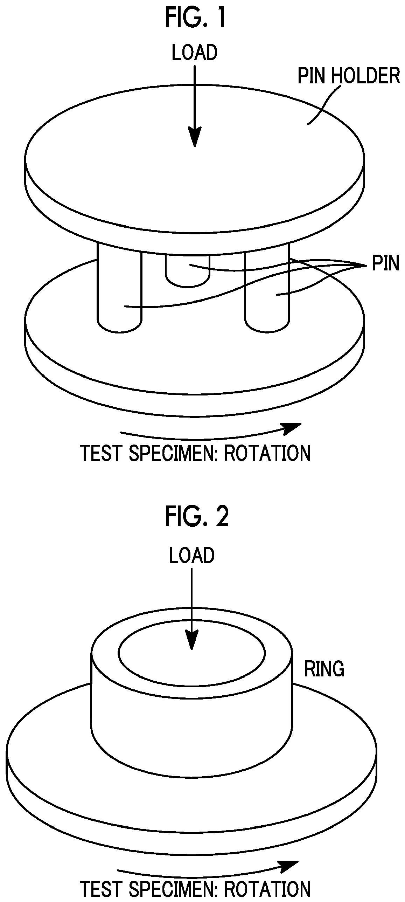

Next, in this state, the test specimen is rotated in a circumferential direction (the in-plane direction) at a circumferential velocity of 8.3 [m/sec] under conditions of room temperature and the atmospheric pressure while imparting a load of a surface pressure 0.6 [MPa] toward the test specimen side from the pin holder side, that is, in a direction perpendicular to the upper surface of the test specimen (sliding member) (the out-of-plane direction) (refer to FIG. 1).

Next, for 30 minutes to 60 minutes from the beginning of the rotation, the dynamic friction coefficient is measured multiple times, and the average value thereof is obtained, whereby the dynamic friction coefficient under a condition of PV=5.0 can be obtained. In addition, the dynamic friction coefficient of the test specimen measured in the above-described manner reaches 0.15 or lower. This indicates that the obtained test specimen (the sliding member of the present invention) has excellent slidability.

Furthermore, the wear amount of the test specimen after the test specimen has been rotated for 60 minutes in the above-described manner is preferably 5.0 mg or less. This indicates that the obtained test specimen (the sliding member of the present invention) has excellent wear resistance.

Furthermore, in the sliding member of the present invention, when the sliding member that has been molded into the disc shape is rotated in the circumferential direction (the in-plane direction) at the circumferential velocity V [m/sec] in a state in which the load of the surface pressure P [MPa] is imparted to the upper surface of the sliding member in the vertical direction (the out-of-plane direction) using one cylindrical ring according to a thrust cylinder (Suzuki)-type friction and wear testing method defined in JIS K 7218 (defined in 1986) and the dynamic friction coefficient of the sliding member is measured, the dynamic friction coefficient reaches 0.25 or lower under a condition of PV=0.5.

Here, the dynamic friction coefficient of the sliding member under a condition of PV=0.5 which is obtained according to the thrust cylinder (Suzuki)-type friction and wear testing method defined in JIS K 7218 (defined in 1986), more specifically, can be obtained in the following manner.

That is, first, the phenolic-resin molding material for a sliding member is injection-molded under conditions of a temperature of 175°C, a pressure of 10 MPa, and a curing duration of 60 seconds and is then subjected to an after-baking treatment under conditions of a temperature of 180°C, in the atmosphere, and a heating duration of eight hours, thereby obtaining a disc-like test specimen (thickness 4 mm×radius 30 mm).

Next, one cylindrical ring (the area of the end surface=200 mm²) which is constituted of carbon steel (S45C) is prepared and is disposed on the upper surface of the test specimen in a state in which the center of the test specimen and the center of the ring are superimposed each other.

Next, in this state, the test specimen is rotated in a circumferential direction (the in-plane direction) at a circumferential velocity of 2.5 [m/sec] under conditions of room temperature and the atmospheric pressure while imparting a load of a surface pressure 0.2 [MPa] toward the test specimen side from the ring side, that is, in a direction perpendicular to the upper surface of the test specimen (sliding member) (the out-of-plane direction) (refer to FIG. 2).

Next, for 30 minutes to 60 minutes from the beginning of the rotation, the dynamic friction coefficient is measured multiple times, and the average value thereof is obtained, whereby the dynamic friction coefficient under a condition of PV=0.5 can be obtained. In addition, the dynamic friction coefficient of the test specimen measured in the above-described manner reaches 0.25 or lower. This indicates that the obtained test specimen (the sliding member of the present invention) has excellent slidability.

Furthermore, the wear amount of the test specimen after the test specimen has been rotated for 60 minutes in the above-described manner is preferably 2.5 mg or less. This indicates that the obtained test specimen (the sliding member of the present invention) has excellent wear resistance.

In addition, the bending strength of the sliding member is preferably 150 MPa or higher. Furthermore, the bending elasticity of the sliding member is preferably 15 MPa or higher. Sliding members having bending strength and bending elasticity in the above-described ranges can be said to have particularly excellent mechanical strength as mechanism components that are used in automobiles and the like.

When the phenolic-resin molding material for a sliding member as described above is molded, a variety of sliding members can be obtained. Examples of the sliding members include vane pumps (vane pumps for power steering), and, more specifically, the sliding member of the present invention can be applied to vanes, rotors, cam rings, and the like in the vane pumps. Furthermore, the sliding member of the present invention can be applied to, additionally, for example, a variety of bearings, thrust washers, and the like.

Hitherto, regarding the phenolic-resin molding material for a sliding member and the sliding member of the present invention, the embodiment illustrated in the drawings has been described, but the present invention is not limited thereto.

For example, the respective portions constituting the sliding member of the present invention can be substituted by a portion having an arbitrary constitution capable of exhibiting the same function. In addition, to the phenolic-resin molding material for a sliding member, arbitrary constituted articles may be added.

### Examples

Hereinafter, specific examples of the present invention will be described. Meanwhile, the present invention is not limited thereto.

### 1. Manufacturing of test specimens

Test specimens were manufactured in the following manner.

### (Example 1)

### 1.1. Production of molding material

The raw materials shown in Table 1 were preliminarily kneaded together at the blending amounts shown in Table 1, were kneaded using a heating roll (90°C), and then, furthermore, were ground, thereby obtaining a phenolic-resin molding material. Meanwhile, the blending amounts shown in Table 1 have a unit of "parts by mass".

The details of the raw materials shown in Table 1 will be described below.

### (Phenolic-resin)

Resole-type phenolic-resin: "PR-53529" manufactured by Sumitomo Bakelite Co., Ltd.

Novolac-type phenolic-resin: "PR-51470" manufactured by Sumitomo Bakelite Co., Ltd.

Meanwhile, as the phenolic-resin, a mixture of the novolac-type phenolic-resin and the resole-type phenolic-resin at a mass ratio of 9:1 was used.

Carbon fiber: "PX35CF" manufactured by Zoltek Companies, Inc.
Graphite: manufactured by RANCO Japan Limited
PTFE: "Polymist" manufactured by SOLVAY Japan, Ltd., average particle diameter of 20 µm
Glass beads: manufactured by Potters Industries LLC, average particle diameter of 10 µm
Others: a lubricant, a plasticizer, and a pigment were used

### 1.2 Molding of test specimen

The obtained molding material was injection-molded under conditions of a temperature of 175°C, a pressure of 10 MPa, and a curing duration of 60 seconds and was then subjected to an after-baking treatment under conditions of a temperature of 180°C, in the atmosphere, and a heating duration of eight hours, thereby obtaining an evaluation test specimen having the following shape.

The shape of a friction and wear test specimen: thickness 4 mm×radius 30 mm

The shape of a bending strength test specimen: width 10 mmxthickness 4 mm × length 80 mm

### (Examples 2 and 3)

Test specimens of Examples 2 and 3 were obtained in the same manner as in Example 1 except for the fact that the blending amounts of the respective constituent raw materials used to prepare the phenolic-resin molding material for a sliding member in 1.1 were changed as shown in Table 1.

### (Comparative Examples 1 to 4)

Test specimens of Comparative Examples 1 to 4 were obtained in the same manner as in Example 1 except for the fact that the blending amounts of the respective constituent raw materials used to prepare the phenolic-resin molding material for a sliding member in 1.1 were changed as shown in Table 1.

### 2. Evaluation of test specimens

### 2-1. Three pin-on-disc-type friction and wear test

### (Examples 1 to 3)

Three pin-on-disc-type friction and wear tests were carried out on the test specimens of Examples 1 to 3 respectively. First, three cylindrical pins (the area of the end surface=20 mm²) which was constituted of carbon steel (S45C) were prepared and were fixed to a disc-like pin holder.

Next, the three pins fixed to the pin holder were provided so as to stand on the upper surface of the test specimen of each example in a state of being the same distance away from the center.

Next, in this state, the test specimen was rotated in a circumferential direction (the in-plane direction) at a circumferential velocity of 8.3 [m/sec] under conditions of room temperature and the atmospheric pressure while imparting a load of a surface pressure 0.6 [MPa] toward the test specimen side from the pin holder side (refer to FIG. 1).

Next, for 30 minutes to 60 minutes from the beginning of the rotation, the dynamic friction coefficient was measured multiple times, and the average value thereof was obtained, whereby the dynamic friction coefficient of the test specimen of each example under a condition of PV=5.0 was obtained.

Furthermore, the wear amount of the test specimen of each example after the test specimen of each example had been rotated for 60 minutes in the above-described manner was measured.

### (Comparative Examples 1 to 4)

The dynamic friction coefficients and the wear amounts of the test specimens of Comparative Examples 1 to 4 under a condition of PV=5.0 were measured in the same manner as in the respective examples except for the fact that the test specimens of Comparative Examples 1 to 4 were respectively used instead of the test specimens of the respective examples.

### 2-2. Thrust cylinder (Suzuki)-type friction and wear test

### (Examples 1 to 3)

Thrust cylinder (Suzuki) -type friction and wear tests were carried out on the test specimens of Examples 1 to 3 respectively. First, one cylindrical ring (the area of the end surface=200 mm²) which was constituted of carbon steel (S45C) was prepared and was disposed on the upper surface of the test specimen of each example.

Next, in this state, the test specimen of each example was rotated in a circumferential direction (the in-plane direction) at a circumferential velocity of 2.5 [m/sec] under conditions of room temperature and the atmospheric pressure while imparting a load of a surface pressure 0.2 [MPa] toward the test specimen side from the ring side (refer to FIG. 2).

Next, for 30 minutes to 60 minutes from the beginning of the rotation, the dynamic friction coefficient was measured multiple times, and the average value thereof was obtained, whereby the dynamic friction coefficient of the test specimen of each example under a condition of PV=0.5 was obtained.

Furthermore, the wear amount of the test specimen of each example after the test specimen of each example had been rotated for 60 minutes in the above-described manner was measured.

### (Comparative Examples 1 to 4)

The dynamic friction coefficients and the wear amounts of the test specimens of Comparative Examples 1 to 4 under a condition of PV=0.5 were measured in the same manner as in the respective examples except for the fact that the test specimens of Comparative Examples 1 to 4 were respectively used instead of the test specimens of the respective examples.

### 2-3. Measurement of bending strength and bending elasticity

The bending strength and the being elasticity (mechanical characteristics) of the test specimens of Examples 1 to 3 and Comparative Examples 1 to 4 were measured respectively using a TENSILON UCT-5c (manufactured by Orientec Corporation).

The evaluation results of the above-described sliding characteristics and mechanical strengths (bending strength and bending elasticity) are shown in Table 1.

**[Table 1]**

| | | | Example | | | Comparative Example | | | |
|---|---|---|---|---|---|---|---|---|---|
| | | | 1 | 2 | 3 | 1 | 2 | 3 | 4 |
| Phenolic-resin | | [wt%] | 36.0 | 18.0 | 45.0 | 35.0 | 34.0 | 13.0 | 55.0 |
| Carbon fiber | | [wt%] | 22.5 | 35.0 | 18.0 | 22.5 | 30.0 | 38.0 | 12.0 |
| Graphite | | [wt%] | 15.0 | 22.5 | 12.0 | 25.0 | 21.0 | 27.0 | 6.5 |
| Polytetrafluoroethylene | | [wt%] | 2.5 | 2.5 | 2.0 | 2.5 | 0.0 | 2.0 | 2.5 |
| Glass beads | | [wt%] | 10.0 | 8.0 | 10.0 | 0.0 | 0.0 | 6.0 | 10.0 |
| Others | | [wt%] | 14.0 | 14.0 | 13.0 | 15.0 | 15.0 | 14.0 | 14.0 |
| Sliding characteristics PV=0.5 | Dynamic friction coefficient | [-] | 0.18 | 0.17 | 0.21 | 0.31 | 0.33 | 0.17 | 0.21 |
| | Wear amount | [mg] | 2.5 | 2.0 | 3.1 | 2.9 | 2.6 | 2.0 | 3.5 |
| Sliding characteristics PV=5.0 | Dynamic friction coefficient | [-] | 0.11 | 0.10 | 0.15 | - | 0.26 | 0.11 | 0.15 |
| | Wear amount | [mg] | 4.7 | 4.0 | 5.8 | - | 16.0 | 3.9 | 6.0 |
| Mechanical characteristics | Bending strength | [MPa] | 224 | 250 | 195 | - | 239 | 255 | 180 |
| | Bending elasticity | [GPa] | 26 | 30 | 23 | - | 28 | 33 | 21 |

### <Slidability>

As shown in Table 1, in the test specimen of each example, the dynamic friction coefficient under a condition of PV=0.5 is 0.25 or lower, and furthermore, the dynamic friction coefficient under a condition of PV=5.0 reaches 0.15 or lower. These results indicate that the test specimen (sliding member) of each example of the present invention has excellent slidability.

In contrast, in the test specimens of Comparative Examples 1 and 2, since no glass beads are added to the phenolic-resin molding material for a sliding member, the dynamic friction coefficient under a condition of PV=0.5 is not 0.25 or lower, and the dynamic friction coefficient under a condition of PV=5.0 fails to reach 0.15 or lower. These results indicate that the slidability of the test specimens (sliding members) of Comparative Examples 1 and 2 is poor.

### <Wear resistance>

In addition, in the test specimens of Examples 1 and 2, the wear amount under a condition of PV=0.5 is 2.5 mg or less, and furthermore, the wear amount under a condition of PV=5.0 reaches 5.0 mg or less. These results indicate that the test specimens (sliding members) of Examples 1 and 2 of the present invention have particularly excellent wear resistance.

In contrast, in the test specimen of Comparative Example 4, the wear amount under a condition of PV=0.5 is above 2.5 mg, and furthermore, the wear amount under a condition of PV=5.0 is above 5.0 mg. These results indicate that the wear resistance (strength) of the test specimens (sliding members) of Comparative Example 4 is poor. This is considered to be because, in the test specimen of Comparative Example 4, the content of the phenolic-resin in the entire phenolic-resin molding material for a sliding member is above 50% by weight.

### <Mechanical strength>

In addition, in the test specimen of each example, the bending strength is 150 MPa or higher, and furthermore, the bending elasticity is 15 GPa or higher. These results indicate that the test specimen (sliding member) of each example has particularly excellent mechanical strength (mechanical characteristics) as mechanism components that are used in automobiles and the like.

In addition, in the respective examples, since the content of the phenolic-resin in the phenolic-resin molding material for a sliding member is 15% by weight or more, the productivity and molding characteristics of the test specimens (sliding members) are sufficiently high. On the other hand, in Comparative Example 3, since the content of the phenolic-resin in the phenolic-resin molding material for a sliding member is less than 15% by weight, the productivity and molding characteristics of the test specimens (sliding members) are poor.

From the above-described results, it was found that, according to the constitution of the present invention, it is possible to obtain sliding members being excellent in terms of all aspects such as slidability, wear resistance, mechanical strength, heat resistance, productivity, and molding characteristics. On the other hand, in the constitutions of the respective comparative examples, it is not possible to obtain sliding members being excellent in terms of all aspects such as slidability, wear resistance, mechanical strength, heat resistance, productivity, and molding characteristics.

### Industrial Applicability

According to the present invention, it is possible to provide a phenolic-resin molding material for a sliding member from which sliding members having excellent slidability and wear resistance can be molded while maintaining excellent heat resistance and mechanical strength and a sliding member which is obtained by molding a cured article of the phenolic-resin molding material for a sliding member and has excellent slidability and wear resistance while maintaining excellent heat resistance and mechanical strength. Therefore, the present invention is industrially applicable.

## Claims

1. A phenolic-resin molding material for a sliding member comprising:
a phenolic-resin;
graphite;
polytetrafluoroethylene; and
spherical glass beads,
wherein a content of the phenolic-resin in the phenolic-resin molding material for a sliding member is 15% by weight or more and 50% by weight or less.

2. The phenolic-resin molding material for a sliding member according to Claim 1,
wherein a content of the polytetrafluoroethylene is 3 parts by mass or more and 15 parts by mass or less with respect to 100 parts by mass of the phenolic-resin.

3. The phenolic-resin molding material for a sliding member according to Claim 1 or 2,
wherein an average particle diameter of the glass beads is 1 µm or larger and 50 µm or smaller.

4. The phenolic-resin molding material for a sliding member according to any one of Claims 1 to 3,
wherein a Vickers hardness (defined in JIS Z 2244) of the glass beads is 8.5 GPa or lower.

5. The phenolic-resin molding material for a sliding member according to any one of Claims 1 to 4,
wherein a content of the glass beads is 10 parts by mass or more and 50 parts by mass or less with respect to 100 parts by mass of the phenolic-resin.

6. The phenolic-resin molding material for a sliding member according to any one of Claims 1 to 5,
wherein a number-average molecular weight of the polytetrafluoroethylene is 10,000 or more and 10,000,000 or less.

7. The phenolic-resin molding material for a sliding member according to any one of Claims 1 to 6, further comprising:
a carbon fiber.

8. The phenolic-resin molding material for a sliding member according to any one of Claims 1 to 7, satisfying Requirement A below:
Requirement A: when a pin-on-disc test in which a sliding member that has been molded into a disc shape using the phenolic-resin molding material for a sliding member is rotated in a circumferential direction at a circumferential velocity V [m/sec] in a state in which a load of a surface pressure P [MPa] is imparted to an upper surface of the sliding member in a vertical direction using three cylindrical pins is carried out according to a ball-on-disc-type friction and wear testing method defined in JIS R 1613 (defined in 1993) and a dynamic friction coefficient of the sliding member is measured, the dynamic friction coefficient reaches 0.15 or lower under a condition of PV=5.0.

9. The phenolic-resin molding material for a sliding member according to Claim 8, further satisfying Requirement B below:
Requirement B: when the sliding member that has been molded into the disc shape using the phenolic-resin molding material for a sliding member is rotated in the circumferential direction at the circumferential velocity V [m/sec] in a state in which the load of the surface pressure P [MPa] is imparted to the upper surface of the sliding member in the vertical direction using one cylindrical ring according to a thrust cylinder (Suzuki)-type friction and wear testing method defined in JIS K 7218 (defined in 1986) and the dynamic friction coefficient of the sliding member is measured, the dynamic friction coefficient reaches 0.25 or lower under a condition of PV=0.5.

10. A sliding member formed by molding the phenolic-resin molding material for a sliding member according to any one of Claims 1 to 9.
